# EUROPÄISCHE PATENTANMELDUNG

(11) **EP 1 923 112 A2**
(43) Veröffentlichungstag der Anmeldung: **21.05.2008**
(21) Anmeldenummer: 07019993.0
(22) Anmeldetag: 12.10.2007
(51) Int. Cl.: B01D 1/00

(54) **Vakuumkonzentrator und Verfahren zur Vakuumkonzentration**

(30) Priorität: 18.11.2006 DE 102006054481
(71) Anmelder: EPPENDORF AG, 22339 Hamburg (DE)
(72) Erfinder: Ramhold, Frank, 06632 Freyburg (DE); van den Berghe, Klaas, 1790 Hekelgem (BE); Grimm, Bert-Olaf, 04277 Leipzig (DE); Goemann, Wolfgang, Dr., 22539 Hamburg (DE); Hess, Rebecca, 21075 Hamburg (DE); Francke, Felix, Dr., 22299 Hamburg (DE)
(74) Vertreter: Hauck Patent- und Rechtsanwälte

(57) **Zusammenfassung**

Vakuumkonzentrator mit
- einer Vakuumkammer (2) mit einem luftdicht schließbaren Verschluß,
- einem in der Vakuumkammer (2) angeordneten Zentrifugenrotor (3) mit mindestens einer Aufnahme (4) für mindestens ein Gefäß für zu trocknende Proben,
- einem außerhalb der Vakuumkammer (2) angeordneten Antriebsmotor (6) zum Antreiben des Zentrifugenrotors (3),
- einer an die Vakuumkammer (2) angeschlossenen Vakuumpumpe (15),
- einer der Vakuumkammer (2) zugeordneten Temperiereinrichtung (8) zum Temperieren der mindestens einen Probe in der Vakuumkammer (2),
- einem der Vakuumkammer (2) zugeordneten Drucksensor (17) zum Erfassen des Druckes innerhalb der Vakuumkammer (2) und
- einer elektrischen Steuerungs- und Auswerteeinrichtung, die mit dem Antriebsmotor (6), der Vakuumpumpe (15), der Temperiereinrichtung (8) und dem Drucksensor (17) verbunden ist, zum Ermitteln des Endpunktes der Vakuumkonzentration mit Hilfe der vom Drucksensor erfaßten Drucke in der Vakuumkammer und Beenden der Vakuumkonzentration bei Feststellung des Endpunktes.

## Beschreibung

Die Erfindung bezieht sich auf einen Vakuumkonzentrator und auf ein Verfahren zur Vakuumkonzentration.

Die Vakuumkonzentration wird in der chemischen Industrie und im Labor insbesondere im Rahmen der Fest-Flüssig-Extraktion und zum Trocknen feuchter, thermisch instabiler Proben eingesetzt. Dabei wird ausgenutzt, daß im Vakuum der Siedepunkt einer Flüssigkeit reduziert ist. Infolgedessen kann die siedende Flüssigkeit im Vakuum bei verhältnismäßig niedrigen Temperaturen aus einer feuchten Probe austreten. Hierfür werden die Proben in einer Vakuumkammer angeordnet, die mittels einer Vakuumpumpe evakuiert wird. Um eine unkontrollierte Freisetzung von Flüssigkeit aus den Proben zu verhindern, sind diese in der Vakuumkammer in einem Zentrifugenrotor angeordnet. Die Wärme für die Verdampfung wird mittels elektrischer oder sonstiger Heizeinrichtungen erzeugt. Der freigesetzte Flüssigkeitsdampf wird durch die Vakuumpumpe abgepumpt. Ein dampfung wird mittels elektrischer oder sonstiger Heizeinrichtungen erzeugt. Der freigesetzte Flüssigkeitsdampf wird durch die Vakuumpumpe abgepumpt. Ein ggfs. zwischen Vakuumkammer und Vakuumpumpe angeordneter Kondensator bzw. eine dort angeordnete Kühlfalle kann den Flüssigkeitsdampf vor der Vakuumpumpe abfangen, so daß die Vakuumpumpe ein besonders tiefes Vakuum erzeugt und die Trocknungsleistung besonders gut ist.

Der Endpunkt der Vakuumkonzentration ist der Zeitpunkt, in dem die Probe trocken ist bzw. keine verdampfte Flüssigkeit mehr aus der Probe austritt. Bekannte Vakuumkonzentratoren arbeiten mit zu langen Zentrifugationszeiten, um sicherzustellen, daß die Flüssigkeit vollständig aus der Probe ausgetreten ist. Dennoch besteht die Gefahr, daß die Proben nicht lange genug getrocknet werden, so daß erhebliche Anteile Restflüssigkeit in den Proben verbleiben. Bekannt ist ferner, die Beheizung der Proben am Ende des Konzentrationsvorgangs nochmals einzuschalten, um durch starkes Erwärmen der Proben die Restflüssigkeit zu verdampfen. Eine abschließende Erwärmung bereits vollständig getrockneter Proben kann zu einer Überhitzung der Proben führen.

Für die Erwärmung der Proben werden insbesondere Strahlungswärme oder Mikrowellen eingesetzt, da im Vakuum eine Wärmeübertragung durch Leitung stark reduziert ist. Eine Überhitzung der vielfach temperaturempfindlichen Proben muß vermieden werden. Gemäß DE 699 18 734 T2 wird die Temperatur der verdampfenden flüssigen Proben im Vakuumkonzentrator bestimmt, indem der Druck während des Verdampfungsprozesses erfaßt wird, ein dem abgetasteten Druck proportionales elektrisches Druck-Datensignal erzeugt wird, das Druck-Datensignal an eine elektronische Datensignalverarbeitung übertragen wird, die Zugriff auf Daten über die in den Proben vorhandenen flüchtigen Bestandteile hat, um das Druck-Datensignal in einen Temperaturwert umzuwandeln, der dem Dampfdruck für den bekannten flüchtigen Bestandteil bzw. den bekannten flüchtigen Bestandteilen der Probe entspricht. Dabei ist nachteilig, daß eine Kenntnis der Flüssigkeit bzw. des Lösungsmittels erforderlich ist und die Daten für das betreffende Lösungsmittel vorliegen müssen.

Davon ausgehend liegt der Erfindung die Aufgabe zugrunde, eine effektive Vorrichtung und ein effektives Verfahren zur Vakuumkonzentration zur Verfügung zu stellen.

Die Aufgabe wird durch einen Vakuumkonzentrator mit den Merkmalen des Anspruches 1 gelöst. Der erfindungsgemäße Vakuumkonzentrator hat
- eine Vakuumkammer mit einem luftdicht verschließbaren Verschluß,
- einen in der Vakuumkammer angeordneten Zentrifugenrotor mit mindestens einer Aufnahme für mindestens ein Gefäß für zu trocknende Proben,
- einen außerhalb der Vakuumkammer angeordneten Antriebsmotor zum Antreiben des Zentrifugenrotors,
- eine an die Vakuumkammer angeschlossene Vakuumpumpe,
- eine der Vakuumkammer zugeordnete Temperiereinrichtung zum Temperieren der mindestens einen Probe in der Vakuumkammer,
- einen der Vakuumkammer zugeordneten Drucksensor zum Erfassen des Druckes innerhalb der Vakuumkammer und
- eine elektrische Steuerungs- und Auswerteeinrichtung, die mit dem Antriebsmotor, der Vakuumpumpe, der Temperiereinrichtung und dem Drucksensor verbunden ist, zum Ermitteln des Endpunktes der Vakuumkonzentration mit Hilfe der vom Drucksensor erfaßten Drucke in der Vakuumkammer und Beenden der Vakuumkonzentration bei Feststellung des Endpunktes.

Ferner wird die Aufgabe durch ein Verfahren mit den Merkmalen des Anspruches 11 gelöst.

Bei dem erfindungsgemäßen Verfahren zur Vakuumkonzentration von Proben wird
- mindestens ein Gefäß mit einer zu trocknenden Probe in einem Zentrifugenrotor in einer Vakuumkammer angeordnet und die Vakuumkammer luftdicht verschlossen,
- der Zentrifugenrotor rotiert,
- die Vakuumkammer evakuiert,
- die mindestens eine Probe in der Vakuumkammer temperiert,
- werden die in der Vakuumkammer herrschenden Drucke erfaßt,
- mit Hilfe der erfaßten Drucke das Erreichen des Endpunktes der Vakuumkonzentration ermittelt und
- die Vakuumkonzentration beim Erreichen des Endpunktes beendet.

Bei der Vakuumkonzentration wird der Druck in der Vakuumkammer durch die Mengenströme der abgepumpten Gase bzw. Dämpfe, der ggfs. infolge von Leckagen einströmenden Luft und der aus den Proben verdampfende Flüssigkeit bestimmt. Am Endpunkt der Trocknung entfällt der letztgenannte Einfluß, weil keine Verdampfung von Probenflüssigkeit mehr stattfindet. Dieser Zeitpunkt ist durch Überwachen des Druckes innerhalb der Vakuumkammer feststellbar. Hierauf baut die Erfindung auf, indem sie den Endpunkt der Vakuumkonzentration mit Hilfe der erfaßten Drucke in der Vakuumkammer ermittelt und die Vakuumkonzentration bei der Feststellung des Endpunktes beendet. Hierdurch ist es möglich, die Vakuumkonzentration vollautomatisch durchzuführen. Vorkenntnisse der Stoffzusammensetzung bzw. der Stoffdaten der zu verdampfenden Flüssigkeit bzw. des zu verdampfenden Lösungsmittels sind nicht erforderlich. Eine thermische Beschädigung der Proben durch Überhitzung der vollständig getrockneten Proben wird vermieden. Außerdem wird die Dauer der Vakuumkonzentration verkürzt. Die Effizienz der Vakuumkonzentration ist verbessert. Technisch ist die Erfindung zudem einfach umsetzbar, da sie grundsätzlich nur die Installation eines Drucksensors und einer entsprechend eingerichteten Steuerungs- und Auswerteeinrichtung erfordert. Die Steuer- und Auswerteeinrichtung kann insbesondere eine entsprechend konfigurierte Hardware oder eine softwaregesteuerte Datenverarbeitungseinrichtung sein.

Die Ermittlung des Endpunktes der Vakuumkonzentration mit Hilfe der gemessenen Drucke in der Vakuumkammer kann auf verschiedene Weisen erfolgen. Gemäß einer Ausgestaltung werden die erfaßten Drucke mit mindestens einem Vorgabewert verglichen und wird beim Erreichen des mindestens einen Vorgabewertes die Vakuumkonzentration beendet. Beispielsweise entspricht ein Vorgabewert dem minimalen Druck (Enddruck), der in einer bestimmten Vakuumkammer mit gegebenenfalls vorhandenen Leckagen unter Einsatz einer bestimmten Vakuumpumpe nach Verdampfung der gesamten Feuchtigkeit aus den Proben erreichbar ist. Mehrere Vorgabewerte können beispielsweise vorgegeben werden, um das allmähliche Annähern des Enddruckes über längere Evakuierungszeiten zu berücksichtigen. Folglich indiziert bei verhältnismäßig kurzen Evakuierungszeiten des Messen verhältnismäßig hoher Druck-Vorgabewerte und bei sehr langen Evakuierungszeiten das Messen des Enddruckes das Erreichen des Endpunktes der Vakuumkonzentration. Des weiteren ist es möglich, aus den erfaßten Drucken und ggfs. weiteren erfaßten Daten, wie z.B. der Zeit, abgeleitete Größen mit Vorgabewerten für diese abgeleiteten Größen zu vergleichen, beispielsweise die Ableitung der Druck-Zeitkurve oder das Integral der Druck-Zeitkurve oder des Druck-Zeitverhältnisses.

Gemäß einer weiteren Ausgestaltung wird an die Vakuumkammer eine Vakuumpumpe mit verhältnismäßig geringer Förderrate angelegt, die den Druck in der Vakuumkammer bis zum Erreichen des Endpunktes nur allmählich absenkt, so daß beim Erreichen des Endpunktes infolge der dann unterbleibenden Freisetzung von verdampften Probenbestandteilen der Druck in der Vakuumkammer sprunghaft absinkt und das Erreichen des Endpunktes anhand der sprunghaften Druckabsenkung ermittelt wird. Die sprunghafte Druckabsenkung ist besonders gut feststellbar. Diese Methode ermöglicht eine besonders sichere Feststellung des Endpunktes.

Gemäß einer weiteren Ausgestaltung wird/werden (a) für die Dauer einer Pumpphase die Vakuumpumpe eingeschaltet bzw. das Vakuum an die Vakuumkammer angelegt, (b) für die Dauer einer Ausschaltphase die Vakuumpumpe ausgeschaltet bzw. das Vakuum von der Vakuumkammer getrennt, (c) die Drucke in der Vakuumkammer während der Ausschaltphase erfaßt, (d) mit Hilfe der in der Ausschaltphase erfaßten Drucke festgestellt, ob der Endpunkt der Vakuumkonzentration erreicht ist und (e) die Vakuumkonzentration bei Feststellung des Endpunktes beendet oder die Schritte (a) bis (e) wiederholt, falls der Endpunkt nicht erreicht ist.

Die dieser Ausgestaltung zugrundeliegende Idee ist, daß durch die verdampfenden Flüssigkeitsanteile der Probe der Druck in der Vakuumkammer ansteigt, wenn die Vakuumpumpe ausgeschaltet bzw. das Vakuum von der Vakuumkammer getrennt ist. Ggfs. wird die Ausschaltphase zusätzlich zum Spülen der Vakuumpumpe mittels Frischluft zum Herausdrücken eventuell darin angesammelter Flüssigkeit genutzt. In einer nachfolgenden Pumpphase muß die Vakuumpumpe die in der Ausschaltphase verdampfte Flüssigkeit abpumpen. Bei fortschreitender Trocknung der Probe wird der Anstieg des Druckes in der Ausschaltphase immer geringer, entsprechend der verringerten Verdampfung von Flüssigkeit. Infolgedessen muß in der nachfolgenden Pumpphase die Vakuumpumpe eine geringere Menge abpumpen. Dementsprechend kann die Ermittlung des Endpunktes durch Auswertung des Druckanstieges in der Ausschaltphase erfolgen. Bei hermetisch abgeschlossener Vakuumkammer weist der Druckanstieg auf eine weitere Freisetzung von Dämpfen aus den Proben hin. Eventuelle Leckagen der Druckkammer können beispielsweise bei einem Probebetrieb der Vakuumkammer ohne enthaltene Proben ermittelt und vom Druckanstieg abgezogen werden, um den Anteil der Freisetzung verdampfter Flüssigkeit an einem Druckanstieg zu ermitteln. Steigt der Druck in der Ausschaltphase nach Abzug des leckagebedingten Anstieges nicht mehr an, ist der Endpunkt erreicht.

Gemäß einer weiteren Ausgestaltung erfolgt eine Regelung des Druckes in der Vakuumkammer auf einen Sollwert unter Erfassung des Druckes in der Vakuumkammer mittels des Drucksensors und Ermitteln des Endpunktes der Vakuumkonzentration durch Auswertung eines Kontroll- oder Steuersignales der Vakuumpumpe (z.B. ein Signal eines Drehzahlgebers oder den Strom oder die Spannung eines elektrischen Antriebsmotors der Vakuumpumpe). Wird bei hermetisch geschlossener Vakuumkammer keine Flüssigkeit verdampft, so wird die Vakuumpumpe nicht angesteuert, wodurch das Erreichen des Endpunktes indiziert wird. Eventuelle Leckagen der Vakuumkammer können in einem Versuch ohne Proben ermittelt werden. Die hierdurch bedingten Kontroll- oder Steuersignale der Vakuumpumpe können ermittelt und von den Kontroll- oder Steuersignalen beim Trocknen von Proben abgezogen werden. So ist der Anteil der Kontroll- oder Steuersignale ermittelbar, der auf der weiteren Freisetzung von Gasen aus den Proben beruht. Sobald diese entfallen, ist der Endpunkt erreicht.

Der Prozeß der Vakuumkonzentration kann auf verschiedene Weisen abgebrochen werden. Gemäß einer Ausgestaltung wird die Vakuumkonzentration durch Abschalten des Antriebsmotors und/oder der Vakuumpumpe und/oder der Temperiereinrichtung und/oder Öffnen des Verschlusses der Vakuumkammer beendet.

Die Proben werden bevorzugt durch Strahlungswärme temperiert. Beispielsweise werden hierfür die Wände der Vakuumkammer beheizt. Zum Einhalten konstanter Trocknungsbedingungen bzw. zur Vermeidung von Überhitzungen der Proben sind gemäß einer Ausgestaltung die Temperiereinrichtung und ein der Vakuumkammer zugeordneter Temperatursensor mit der Steuerungs- und Auswerteeinrichtung verbunden, zum Überwachen der Temperatur in der Vakuumkammer und/oder Regeln der Temperatur in der Vakuumkammer auf einen Sollwert. Der Sollwert ist gegebenenfalls in Abhängigkeit von der zu trocknenden Probe einstellbar.

Die Aufgabe wird ferner durch einen Vakuumkonzentrator mit den Merkmalen des Anspruches 8 gelöst.

Der erfindungsgemäße Vakuumkonzentrator hat
- eine Vakuumkammer mit einem luftdicht schließbaren Verschluß,
- einen in der Vakuumkammer angeordneten Zentrifugenrotor mit mindestens einer Aufnahme für mindestens ein Gefäß für zu trocknende Proben,
- einen außerhalb der Vakuumkammer angeordneten Antriebsmotor zum Antreiben des Zentrifugenrotors,
- eine an die Vakuumkammer angeschlossene Vakuumpumpe,
- eine der Vakuumkammer zugeordnete Temperiereinrichtung zum Temperieren der mindestens einen Probe in der Vakuumkammer,
- einen Temperatursensor in einem in der Vakuumkammer mündenden und mit der Vakuumpumpe verbundenen Saugrohr und
- eine elektrische Steuerungs- und Auswerteeinrichtung, die mit dem Antriebsmotor, der Vakuumpumpe, der Temperiereinrichtung und dem Temperatursensor verbunden ist, zum Regeln der Temperatur der Proben auf einen Sollwert.

Der Vakuumkonzentrator kann vorteilhaft mindestens eines der weiteren Merkmale der zuvor erläuterten Vakuumkonzentratoren aufweisen.

Ferner wird die Aufgabe durch ein Verfahren mit den Merkmalen des Anspruches 18 gelöst.

Bei dem erfindungsgemäßen Verfahren zur Vakuumkonzentration von Proben wird
- mindestens ein Gefäß mit einer zu trocknenden Probe in einem Zentrifugenrotor in einer Vakuumkammer angeordnet und die Vakuumkammer luftdicht verschlossen,
- der Zentrifugenrotor rotiert,
- die Vakuumkammer evakuiert,
- die mindestens eine Probe in der Vakuumkammer temperiert,
- die Temperatur in einem Saugrohr zum Anlegen eines Vakuums an die Vakuumkammer erfaßt und
- mit Hilfe der erfaßten Temperatur die Temperatur der Proben auf einen Sollwert geregelt.

Das erfindungsgemäße Verfahren kann vorteilhaft mindestens eines der weiteren Merkmale der zuvor erläuterten Verfahren aufweisen.

Dadurch, daß der Temperatursensor in einem in der Vakuumkammer mündenden und mit der Vakuumpumpe verbundenen Saugrohr angeordnet ist, kommt der Temperatursensor in innigen Kontakt mit den freigesetzten Dämpfen. Das Saugrohr schirmt den Temperatursensor von den umgebenden Bereichen der Vakuumkammer ab, so daß eine Beeinflussung der Messung durch Wärmeaustausch des Temperatursensors mit den Wandungen der Vakuumkammer vermieden wird. Hierdurch wird eine genauere Überwachung bzw. Regelung der Temperatur der Probe ermöglicht und die Effizienz der Vakuumkonzentration verbessert.

Gemäß einer bevorzugten Ausgestaltung ist das Saugrohr auf das Zentrum des Zentrifugenrotors gerichtet. Im Zentrum des Zentrifugenrotors können die von den Proben freigesetzten Dämpfe besonders gut abgesaugt werden, so daß die Temperatur der Proben mittels des im Saugrohr angeordneten Temperatursensors besonders gut gemessen werden kann.

Die Temperiereinrichtung ist bevorzugt eine Heizeinrichtung, insbesondere eine elektrische Heizeinrichtung. Die Heizeinrichtung ist insbesondere so angeordnet und ausgebildet, daß sie mindestens eine Innenwand der Vakuumkammer erwärmt. Bevorzugt werden sämtliche Innenwände der Vakuumkammer gleichmäßig erwärmt.

Die Erfindung wird nachfolgend anhand der anliegenden Zeichnungen von Ausführungsbeispielen und Diagrammen erläutert. Es zeigen:
- Fig. 1: einen Vakuumkonzentrator in einer grobschematischen Perspektivansicht;
- Fig. 2: Vakuumkammer des Vakuumkonzentrators mit Saugrohr unterhalb des Deckels im Vertikalschnitt;
- Fig. 3: Vakuumkammer des Vakuumkonzentrators mit alternativer Anordnung des Saugrohres im Deckel im Vertikalschnitt.
- Diagramm 1: den Verlauf des Druckes in der Vakuumkammer über der Zeit bei Verdampfung von Ethanol;
- Diagramm 2: den Verlauf des Druckes in der Vakuumkammer über der Zeit für die Verdampfung von Wasser;
- Diagramm 3: vergrößerter Ausschnitt mit dem Endpunkt aus Diagramm 2;
- Diagramm 4: Verlauf des Druckes in der Vakuumkammer ohne Proben über der Zeit beim Anhalten der Vakuumpumpe nach Erreichen des Enddruckes.

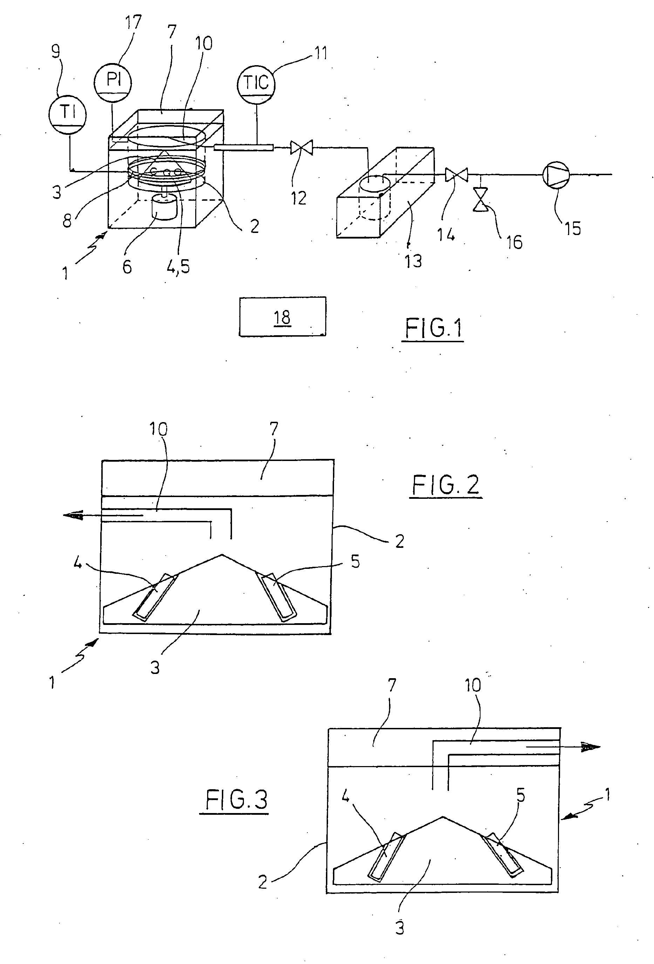

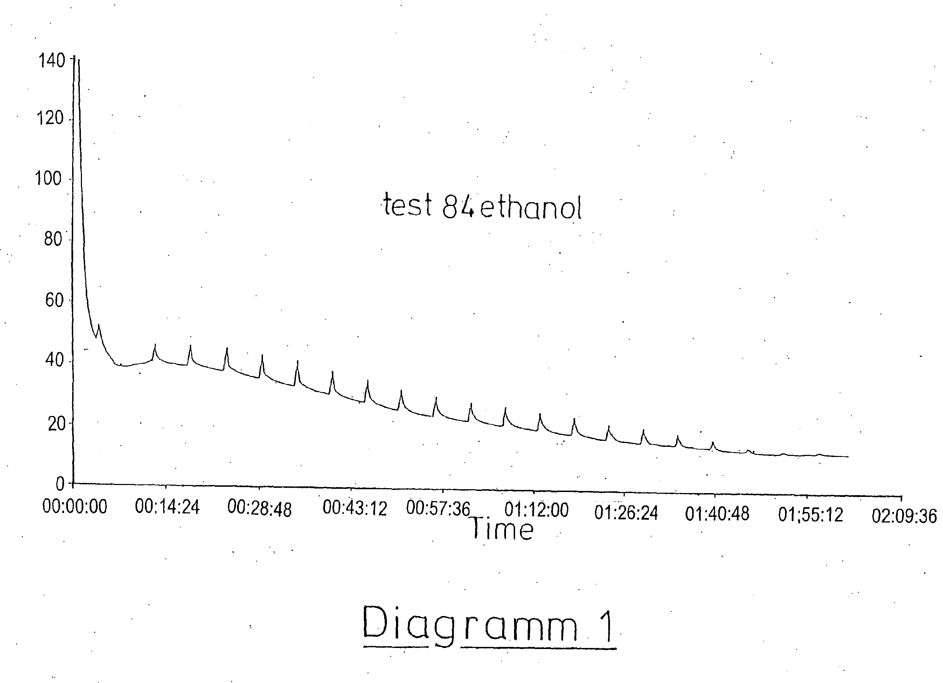

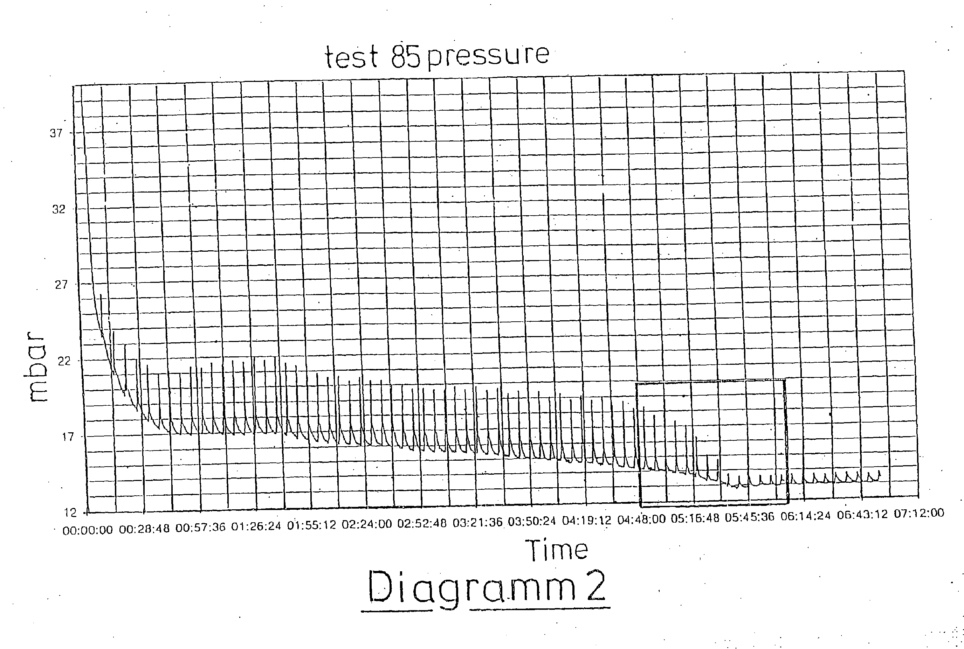

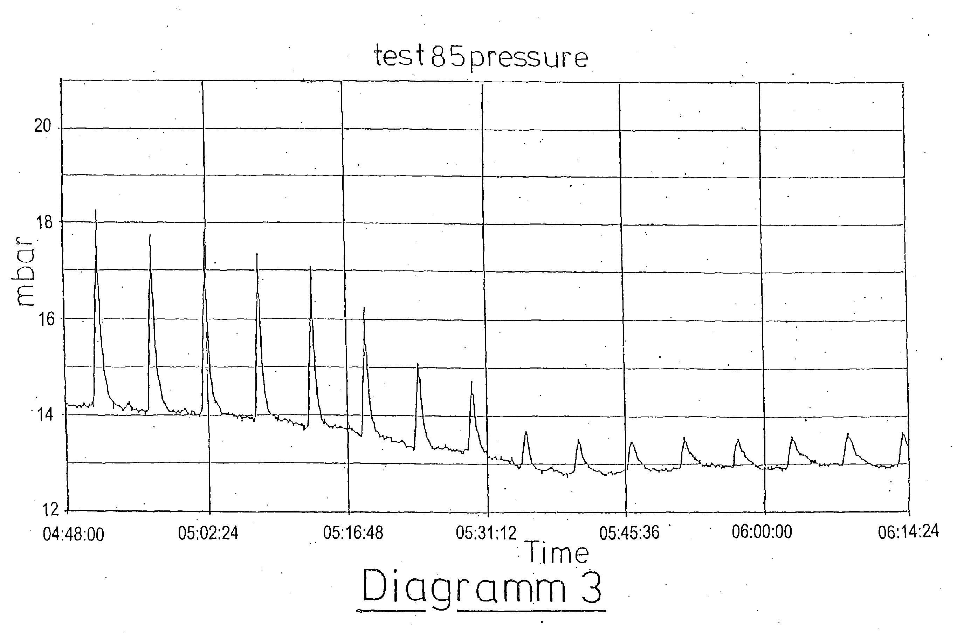

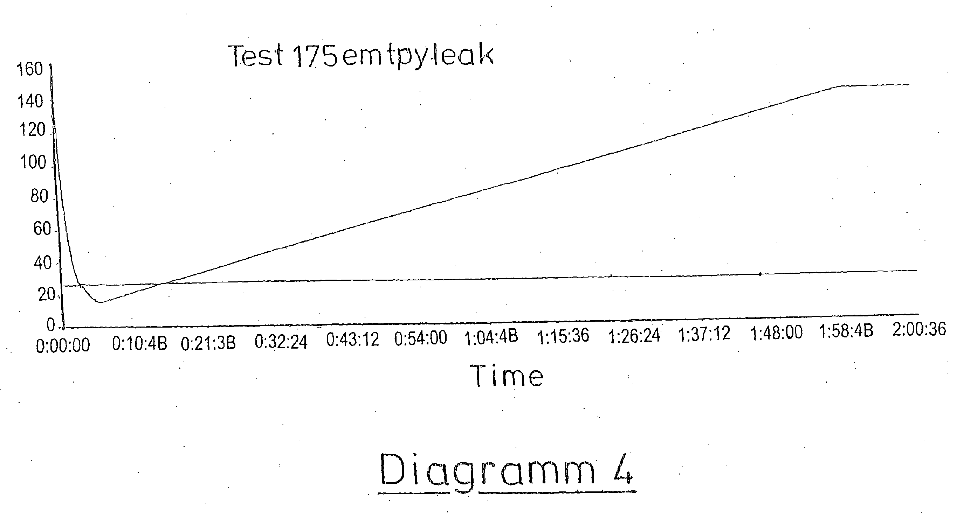

Gemäß Fig. 1 umfaßt der Vakuumkonzentrator ein Gehäuse 1 mit einer Vakuumkammer 2, in der ein Zentrifugenrotor 3 mit mehreren Aufnahmen 4 für Probengefäße 5 angeordnet ist. Außerhalb der Vakuumkammer 2 ist im Gehäuse 1 eine Antriebseinheit 6 (z.B. mit elektrischem Antriebsmotor) zum Antreiben des Zentrifugenrotors 3 angeordnet.

Die Vakuumkammer 2 ist oben durch einen Verschluß in Form eines abdichtenden Deckels 7 verschlossen, der aufklappbar ist.

Der Vakuumkammer 2 ist eine Heizeinrichtung 8 zugeordnet, die elektrische Heizdrähte aufweist, welche die Vakuumkammer 2 umgeben. Der Heizeinrichtung 8 ist ein Temperatursensor 9 zum Messen der Temperatur der Heizeinrichtung 8 zugeordnet, um ein Überhitzen der Heizeinrichtung zu vermeiden.

Zentral oberhalb des Zentrifugenrotors 3 mündet ein Saugrohr 10, das radial unterhalb bzw. innerhalb des Deckels 7 erstreckt ist. Die Mündung des Saugrohres 10 ist axial auf den Zentrifugenrotor 3 gerichtet.

In dem Saugrohr 10 sitzt ein weiterer Temperatursensor 11.

Gemäß Fig. 2 ist der Temperatursensor 11 im Saugrohr 10 unterhalb des Deckels 7 angeordnet. Das Saugrohr 10 ist bevorzugt klappbar, schwenkbar oder flexibel, damit es für das Einsetzen und Entnehmen des Zentrifugenrotors 3 oder von Gefäßen 5 entfernbar ist.

Gemäß Fig. 3 ist das Saugrohr 10 in den Deckel 7 der Vakuumkammer 2 integriert. In beiden Fällen wird der Temperatursensor 11 vom abgesaugten Dampfstrom umspült, so daß hervorragende Wärmeübergangswerte auch im Vakuum erreicht werden. Das Saugrohr 10 schützt vor Wärmestrahlung, da durch die abgesaugten Dämpfe auf der Innenseite des Saugrohres 10 die gleich Temperatur wie am Temperatursensor 11 erreicht wird und damit keine Wärmestrahlung auftreten kann. Auch eine Wärmeleitung von den Wänden der Vakuumkammer 2 zum Saugrohr 10 kann durch entsprechende Isolierung des Saugrohres 10 bezüglich der Wände vermieden werden.

Das Saugrohr 10 ist über ein Ventil 12 mit einer Kühlfalle 13 verbunden. Diese ist über ein Ventil 14 mit einer Vakuumpumpe 15 verbunden. Vor der Vakuumpumpe 15 ist ein weiteres Ventil 16 vorhanden. Die Ventile 12, 14, 16 sind elektrisch steuerbar.

Des weiteren ist an die Vakuumkammer 1 ein Drucksensor 17 angeschlossen.

Der Antriebsmotor 6, die Heizeinrichtung 8, die Ventile 12, 14, 16, die Temperatursensoren 9, 11, die Vakuumpumpe 15 und der Drucksensor 17 sind elektrisch über nicht gezeigte elektrische Leitungen mit einer elektrischen Steuer- und Auswerteeinrichtung 18 verbunden.

Bei Durchführung einer Vakuumextraktion wird der Zentrifugenrotor 3 mit den eingesetzten Gefäßen 5 rotiert. Außerdem wird mittels des weiteren Temperatursensors 11 die Temperatur der Proben in den Gefäßen 5 überwacht und die Heizeinrichtung 8 so geregelt, daß die Proben innerhalb der Gefäße 4 eine bestimmte Temperatur annehmen. Mittels des Temperatursensors 9 soll eine eventuelle Überhitzung der Heizeinrichtung 8 erfaßt werden.

Des weiteren wird die Pumpe 15 so betrieben, daß bei geöffneten Ventilen 12, 14 und geschlossenem Ventil 16 durch das Saugrohr 10 Gase aus der Vakuumkammer 2 abgesaugt werden. In der Kühlfalle 13 werden die abgesaugten Dämpfe kondensiert, damit die Vakuumpumpe 15 einen möglichst großen Durchsatz hat und in der Vakuumkammer 2 ein möglichst tiefes Vakuum erreicht wird.

Über den Drucksensor 17 wird fortlaufend der Druck in der Vakuumkammer 1 erfaßt.

Da auch in der Vakuumpumpe 15 Dampf kondensiert, werden wiederholt nach Ablauf bestimmter Trocknungszeiten die Ventile 12, 14 geschlossen und die Vakuumpumpe 15 abgeschaltet. Über das Ventil 16 wird Frischluft in die Vakuumpumpe 15 geleitet und dadurch die anfallende Feuchtigkeit aus der Vakuumpumpe 15 gedrückt. Danach wird das Ventil 16 geschlossen, die Vakuumpumpe 15 wieder angestellt und die Ventile 12, 14 geöffnet.

In der Vakuumkammer 2 sinkt der Druck allmählich ab. Dies ist für das Beispiel einer Probe, die Ethanol als Lösungsmittel enthält, in Diagramm 1 gezeigt. Die Zacken der Kurve betreffen die Ausschaltphasen, in denen Druck in der Vakuumkammer aufgrund der weiteren Freisetzung von Lösungsmittel und von Leckagen wieder ansteigt.

In diesem Beispiel wird eine Vakuumpumpe 15 mit relativ geringer Leistungsfähigkeit eingesetzt, so daß über die gesamte Versuchszeit erst allmählich ein Enddruck in der Größenordnung von etwa 15 mbar erreicht wird. Dies ist dann der Fall, wenn die Höhe der Zacken in den Ausschaltphasen äußerst gering ist, weil kaum noch Lösungsmittel verdampft.

Es ist somit möglich, das Erreichen des Endpunktes durch Vergleichen des mittleren Druckes in der Vakuumkammer 2 mit dem Enddruck der Pumpe (etwa 15 mbar) zu ermitteln. Grundsätzlich geeignet für die Ermittlung des Endpunktes ist auch die Steigung der Druckkurve. Ferner kann die Differenz der Drucke in der Vakuumkammer 2 zu Beginn und am Ende der Ausschaltphasen herangezogen werden, d.h. die Höhe der Zacken.

Die vorbeschriebenen Steuer-, Überwachungs-, Regelungs- und Auswertevorgänge werden von der Steuer- und Auswerteeinrichtung 18 kontrolliert.

Die Diagramme 2 und 3 demonstrieren den Druckabfall in der Vakuumkammer 1 bei Einsatz von Proben, die Wasser enthalten. Die Trocknungszeiten sind viel länger als bei Ethanol, weil Wasser einen viel geringeren Dampfdruck als Ethanol aufweist. Am Endpunkt wird wiederum der Enddruck erreicht. Außerdem nimmt die Steigung der Druckkurve deutlich ab. Ferner ist die Höhe der Zacken nach dem Erreichen des Endpunktes sehr gering, weil in den Ausschaltphasen ein Druckanstieg nur noch aufgrund von Leckagen erfolgt.

Der Leckagewert des Systems kann leicht ermittelt werden, indem der Vakuumkonzentrator ohne Proben in Betrieb gesetzt wird und nach Erreichen des Enddruckes die Vakuumpumpe 15 angehalten wird. Gemäß Diagramm 4 steigt der Druck innerhalb der Vakuumkammer 1 aufgrund der Leckagen allmählich an. In einer Ausschaltphase in der Verlauf der Zacken dieser Leckagekurve entspricht, ist der Endpunkt erreicht.

Alternativ kann bei einer drehzahlgeregelten Vakuumpumpe 15 ein interner Drucksensor der Vakuumpumpe 15 zum Erfassen der Regelgröße (Druck im Eintritt der Vakuumpumpe) nutzbar gemacht werden. Sobald ein Kontroll- oder Steuersignal (z.B. ein Signal eines Drehzahlgebers oder der Strom oder die Spannung ihres elektrischen Antriebsmotors) der Vakuumpumpe 15 absinkt, ist der Endpunkt der Zentrifugation erreicht, da dann die Vakuumpumpe 15 keine Dämpfe mehr aus der Vakuumkammer fördert, sondern Luft, die durch Leckagen eintritt.

Grundsätzlich ist es auch möglich, eine Vakuumpumpe 15 mit größerer Leistung einzusetzen, um die Trocknung zu beschleunigen. In der Vakuumkammer 2 wird dann schneller als in den obigen Beispielen der Enddruck erreicht. Dennoch ist der Endpunkt der Zentrifugation gut erkennbar, z.B. durch Überprüfung der Höhe der Zacken in den Ausschaltphasen.

Eine weitere Möglichkeit, den Endpunkt zu erkennen besteht darin, die Steigung des Druckanstieges in den Ausschaltphasen zu ermitteln. Diese Steigung fällt nach dem Erreichen des Endpunktes stark ab, da dann keine flüssigen Probenbestandteile verdampft werden.

## Patentansprüche

1. Vakuumkonzentrator mit
- einer Vakuumkammer (2) mit einem luftdicht schließbaren Verschluß (7),
- einem in der Vakuumkammer (2) angeordneten Zentrifugenrotor (3) mit mindestens einer Aufnahme (4) für mindestens ein Gefäß (5) für zu trocknende Proben,
- einem außerhalb der Vakuumkammer (2) angeordneten Antriebsmotor (6) zum Antreiben des Zentrifugenrotors (3),
- einer an die Vakuumkammer (2) angeschlossenen Vakuumpumpe (15),
- einer der Vakuumkammer (2) zugeordneten Temperiereinrichtung (8) zum Temperieren der mindestens einen Probe in der Vakuumkammer (2),
- einem der Vakuumkammer (2) zugeordneten Drucksensor (17) zum Erfassen des Druckes innerhalb der Vakuumkammer (2) und
- einer elektrischen Steuerungs- und Auswerteeinrichtung (18), die mit dem Antriebsmotor (6), der Vakuumpumpe (15), der Temperiereinrichtung (8) und dem Drucksensor (17) verbunden ist, zum Ermitteln des Endpunktes der Vakuumkonzentration mit Hilfe der vom Drucksensor (17) erfaßten Drucke in der Vakuumkammer (2) und Beenden der Vakuumkonzentration bei Feststellung des Endpunktes.

2. Vakuumkonzentrator nach Anspruch 1 mit einer Steuerungs- und Auswerteeinrichtung (18) zum Ermitteln des Endpunktes der Vakuumkonzentration durch Vergleichen der erfaßten Drucke und/oder daraus abgeleiteter Größen mit mindestens einem Vorgabewert und Beenden der Vakuumkonzentration beim Erreichen des mindestens einen Vorgabewertes.

3. Vakuumkonzentrator nach Anspruch 2 mit einer Vakuumpumpe (15) mit geringer Förderrate.

4. Vakuumkonzentrator nach einem der Ansprüche 1 bis 3 mit einer Auswerte-und Steuerungseinrichtung (18) zum (a) Einschalten der Vakuumpumpe (15) für die Dauer einer Pumpphase, (b) Ausschalten der Vakuumpumpe (15) nach Ablauf der Pumpphase für die Dauer einer Ausschaltphase, (c) Erfassen der Drucke in der Vakuumkammer (2) während der Ausschaltphase, (d) Feststellen mit Hilfe der in der Ausschaltphase erfaßten Drucke, ob der Endpunkt der Vakuumkonzentration erreicht ist und (e) Beenden der Vakuumkonzentration bei Feststellung des Endpunktes oder Wiederholen der Schritte (a) bis (e), falls der Endpunkt nicht erreicht ist.

5. Vakuumkonzentrator nach einem der Ansprüche 1 bis 4 mit einer Steuerungs-und Auswerteeinrichtung (18) zum Regeln des Druckes in der Vakuumkammer (2) auf einen Sollwert unter Erfassung des Druckes in der Vakuumkammer (2) mittels des Drucksensors (17) und Ermitteln des Endpunktes der Vakuumkonzentration durch Auswertung von Kontroll- oder Steuersignalen der Vakuumpumpe (15).

6. Vakuumkonzentrator nach einem der Ansprüche 1 bis 5 mit einer Steuerungs-und Auswerteeinrichtung (18) zum Beenden der Vakuumkonzentration durch Abschalten des Antriebsmotors (6) und/oder der Vakuumpumpe (15) und/oder der Temperiereinrichtung (8) und/oder Öffnen des Verschlusses (7).

7. Vakuumkonzentrator nach einem der Ansprüche 1 bis 6, bei dem die Temperiereinrichtung (8) und ein der Vakuumkammer (2) zugeordneter Temperatursensor (9) mit der Steuerungs- und Auswerteeinrichtung (18) verbunden sind, zum Überwachen der Temperatur in der Vakuumkammer (2) und/oder Regeln der Temperatur in der Vakuumkammer (2) auf einen Sollwert.

8. Vakuumkonzentrator mit
- einer Vakuumkammer (2) mit einem luftdicht schließbaren Verschluß (7),
- einem in der Vakuumkammer (2) angeordneten Zentrifugenrotor (3) mit mindestens einer Aufnahme (4) für mindestens ein Gefäß (5) für zu trocknende Proben,
- einem außerhalb der Vakuumkammer (2) angeordneten Antriebsmotor (6) zum Antreiben des Zentrifugenrotors (3),
- einer an die Vakuumkammer (2) angeschlossenen Vakuumpumpe (15),
- einer der Vakuumkammer (2) zugeordneten Temperiereinrichtung (8) zum Temperieren der mindestens einen Probe in der Vakuumkammer (2),
- einem Temperatursensor (11) in einem in der Vakuumkammer (2) mündenden und mit der Vakuumpumpe (15) verbundenen Saugrohr (10) und
- einer elektrischen Steuerungs- und Auswerteeinrichtung (18), die mit dem Antriebsmotor (6), der Vakuumpumpe (15), der Temperiereinrichtung (8) und dem Temperatursensor (11) verbunden ist, zum Regeln der Temperatur der Proben auf einen Sollwert.

9. Vakuumkonzentrator nach Anspruch 8 und einem der Ansprüche 1 bis 7.

10. Vakuumkonzentrator nach Anspruch 8 oder 9, bei dem das Saugrohr (10) auf das Zentrum des Zentrifugenrotors (3) gerichtet ist.

11. Verfahren zur Vakuumkonzentration von Proben, bei dem
- mindestens ein Gefäß mit einer zu trocknenden Probe in einem Zentrifugenrotor in einer Vakuumkammer angeordnet und die Vakuumkammer luftdicht verschlossen wird,
- der Zentrifugenrotor rotiert wird,
- die Vakuumkammer evakuiert wird,
- die mindestens eine Probe in der Vakuumkammer temperiert wird,
- die in der Vakuumkammer herrschenden Drucke erfaßt werden,
- mit Hilfe der erfaßten Drucke das Erreichen des Endpunktes der Vakuumkonzentration ermittelt wird und
- die Vakuumkonzentration beim Erreichen des Endpunktes beendet wird.

12. Verfahren nach Anspruch 11, bei dem die erfaßten Drucke und/oder daraus abgeleitete Größen mit mindestens einem Vorgabewert verglichen werden und beim Erreichen des mindestens einen Vorgabewertes die Vakuumkonzentration beendet wird.

13. Verfahren nach Anspruch 12, bei dem die Vakuumkammer mit einer Pumpe mit einer geringen Förderleistung verbunden wird, die den Druck in der Vakuumkammer bis zum Erreichen des Endpunktes nur allmählich absenkt, so daß beim Erreichen des Endpunktes infolge der dann unterbleibenden Freisetzung von verdampften Probenbestandteilen der Druck in der Vakuumkammer sprunghaft absinkt und das Erreichen des Endpunktes anhand der sprunghaften Druckabsenkung ermittelt wird.

14. Verfahren nach einem der Ansprüche 11 bis 13, bei dem (a) für die Dauer einer Pumpphase ein Vakuum an die Vakuumkammer angelegt wird, (b) für die Dauer einer Ausschaltphase kein Vakuum an die Vakuumkammer angelegt wird, (c) die Drucke in der Vakuumkammer während der Ausschaltphase erfaßt werden, (d) mit Hilfe der in der Ausschaltphase erfaßten Drucke festgestellt wird, ob der Endpunkt der Vakuumkonzentration erreicht ist und (e) die Vakuumkonzentration bei Feststellung des Endpunktes beendet oder die Schritte (a) bis (e) wiederholt werden, falls der Endpunkt nicht erreicht ist.

15. Verfahren nach einem der Ansprüche 11 bis 14, bei dem der Druck in der Vakuumkammer auf einen Sollwert geregelt wird und durch Auswertung von Kontroll- oder Steuersignalen der Vakuumpumpe ermittelt wird, ob der Endpunkt der Vakuumkonzentration erreicht ist.

16. Verfahren nach einem der Ansprüche 11 bis 15, bei dem das Verfahren der Vakuumkonzentration durch Anhalten des Zentrifugenrotors und/oder Beendigen des Anlegens des Vakuums an die Vakuumkammer und/oder Beendigen der Temperierung der Vakuumkammer und/oder Öffnen der Vakuumkammer beendet wird.

17. Verfahren nach einem der Ansprüche 11 bis 16, bei dem die Temperatur in der Vakuumkammer überwacht und/oder auf einen Sollwert geregelt wird.

18. Verfahren zur Vakuumkonzentration von Proben, bei dem
- mindestens ein Gefäß mit einer zu trocknenden Probe in einem Zentrifugenrotor in einer Vakuumkammer angeordnet und die Vakuumkammer luftdicht verschlossen wird,
- der Zentrifugenrotor rotiert wird,
- die Vakuumkammer evakuiert wird,
- die mindestens eine Probe in der Vakuumkammer temperiert wird,
- die Temperatur in einem Saugrohr zum Anlegen eines Vakuums an die Vakuumkammer erfaßt wird,
- mit Hilfe der erfaßten Temperatur die Temperatur der Proben auf einen Sollwert geregelt wird.

19. Verfahren nach Anspruch 18 und einem der Ansprüche 11 bis 17.

20. Verfahren nach einem der Ansprüche 11 bis 19, bei dem die Temperaturregelung eine Erfassung der Temperatur im Zentrum des Zentrifugenrotors umfaßt.
